Europäisches Patentamt

European Patent Office

Office européen des brevets

(11) Publication number: **0 205 783 B1**

# EUROPEAN PATENT SPECIFICATION

(45) Date of publication of patent specification: **27.05.92**   (51) Int. Cl.5: **H01M 4/42,** H01M 6/08

(21) Application number: **86104658.9**

(22) Date of filing: **05.04.86**

(54) **Alkaline cell employing a zinc electrode with reduced mercury additive.**

(30) Priority: **28.06.85 US 749781**

(43) Date of publication of application:
**30.12.86 Bulletin 86/52**

(45) Publication of the grant of the patent:
**27.05.92 Bulletin 92/22**

(84) Designated Contracting States:
**BE CH DE FR GB LI**

(56) References cited:
FR-A- 2 335 963      FR-A- 2 381 394
FR-A- 2 525 395      GB-A- 2 067 346
GB-A- 2 170 946      US-A- 3 847 669
US-A- 4 195 120

CHEMICAL ABSTRACTS, vol. 84, no. 12, 14th
June 1976, page 159, abstract no. 167300u,
Columbus, Ohio, US; & JP-A-75 96 849
(MATSUSHITA ELECTRIC INDUSTRIAL CO.,
LTD) 01-08-1975

PATENT ABSTRACTS OF JAPAN, vol. 11, no.
36 (E-477)[2483], 3rd February 1987; & JP-
A-61 203 564 (TOSHIBA CORP.) 09-09-1986

(73) Proprietor: **EVEREADY BATTERY COMPANY, INC.**
**Checkerboard Square**
**St. Louis Missouri 63164(US)**

(72) Inventor: **Winger, Jerrold**
**312 Michigan Ave**
**Elyria, Oh 44035(US)**

(74) Representative: **Tubby, David George et al**
**MARKS & CLERK 57-60 Lincoln's Inn Fields**
**London WC2A 3LS(GB)**

## Description

Field of the Invention

The invention relates to an alkaline zinc-manganese dioxide electrochemical cell containing a compound having polyethylene oxide linkages in conjunction with indium as a means for reducing the proportion of mercury needed to provide adequate shelf life for the cell.

Background of the Invention

Alkaline electrochemical cells having a zinc anode and a manganese dioxide cathode have in recent years become commercially important as a relatively high rate source of electrical energy. The alkaline electrolyte, which is conventionally concentrated aqueous potassium hydroxide, is a principal factor contributing to the ability of these cells to deliver high rates of electrical energy compared to the older Leclanche cells which utilize zinc chloride and/or ammonium chloride electrolytes. However, as is so often the case with technological advances, the presence of alkali in an electrochemical cell is not an unmixed blessing. For instance, alkali, a very reactive substance, reacts with zinc. Unless means are employed to control this reaction, the shelf life of alkaline zinc cells would be unacceptably short. In addition, since hydrogen gas is released in the reaction between alkali and zinc, there would be a danger of cell explosion unless a fail-safe means for venting the hydrogen is provided.

In commercial alkaline zinc cells, the reaction between zinc and alkali is controlled or reduced to an acceptable rate by the addition of mercury to the cell. Unfortunately, it has recently become apparent that the introduction of mercury into the environment may be a hazard to human health as well as to other forms of life. While individual cells contain only a small amount of mercury, the very large number of zinc alkaline cells marketed today could cause significant quantities of mercury to enter the environment after disposal of such cells.

U.S. Patent 3,847,669 disclosed an alkaline zinc-manganese dioxide cell in which the proportion of mercury needed to achieve acceptable storage life can be reduced by the addition of small amounts of an ethylene oxide polymer.

U.S. Patent 4,500,614 discloses an alkaline cell having an anode prepared by amalgamating an alloy powder made of zinc and at least two metals selected from the group consisting of gallium, indium and thallium. The metals are incorporated in the cell to reduce the amount of mercury required to prevent corrosion of the zinc in an alkaline electrolyte so as to prevent generation of hydrogen gas and to prevent leakage of the electrolyte.

German Patent 1,086,309 discloses an alkaline zinc cell in which an indium compound is added to the electrolyte and/or indium metal is alloyed with refined zinc so as to protect the zinc against corrosion in an acidic, neutral or alkaline electrolyte.

Japanese Publication No. 1958-3204, published April 26, 1958, recites that the addition of 0.0001% to 2.0% indium can be added to pure zinc base alloy containing one, two, or more of the metallic elements Fe, Cd, Cr, Pb, Ca, Hg, Bi, Sb, Al, Ag, Mg, Si, Ni, Mn, etc., to form a zinc alloy which has a high corrosion resistance and which is suitable for use in primary cells.

It is an object of the present invention to provide a means for reducing the proportions of mercury needed in an alkaline zinc cell to reduce the reaction rate between alkali and zinc in order to achieve acceptable shelf storage life.

It is another object of the present invention to incorporate into an alkaline zinc cell a compound having polyethylene oxide linkages and indium to provide a synergistic type effect such that the amount of mercury needed to reduce the reaction between the alkali and the zinc can be greatly reduced while still providing acceptable shelf storage life.

These and other objects of the invention will be apparent from the following description.

Summary of the Invention

The invention relates to a galvanic cell having a manganese dioxide cathode, an alkaline electrolyte solution and a zinc anode containing mercury, the improvement wherein said mercury is present in an amount between about 0.04 and about 3.0 weight percent based on the weight of the zinc, and wherein a compound containing polyethylene oxide linkages in an amount of at least about 0.001 weight percent based on the weight of the zinc and indium in an amount of between about 0.005 and about 0.1 weight percent based on the weight of the zinc are added to the cell.

Mercury has been added to alkaline zinc cells in amounts as high as 10 weight percent based on the weight of the zinc to reduce corrosion of the zinc and provide acceptable shelf life for the cell. It has been discovered that if both indium and a compound having polyethylene oxide linkages are added to an alkaline zinc cell then the amount of mercury required for acceptable shelf storage life can be greatly reduced while still providing an acceptable storage life for the battery. The combination of a compound having polyethylene oxide linkages and indium along with a small amount of mercury will provide an improved storage stability when compared to an otherwise identical cell containing the same amount of mercury and a compound having polyethylene oxide linkages but in the absence of indium or containing the same amount of mercury and indium in the absence of a compound having polyethylene oxide linkages.

The amount of mercury in the cell is preferably between about 0.04 and 3.0 weight percent based on the weight of the zinc and more preferably could be between about 0.08 and about 2.00 weight percent. An amount of mercury below 0.04 weight percent would be insufficient to provide adequate storage stability of the cell even with the addition of both a compound having polyethylene oxide linkages and indium. An amount of mercury above 3.0 weight percent would provide good storage stability but would also provide excess mercury to be disposed of upon discharge of the cell.

The amount of a compound having polyethylene oxide linkages in the cell is preferably between about 0.001 and about 0.8 weight percent based on the weight of the zinc and more preferably could be between about 0.01 and about 0.2 weight percent. The amount of indium in the cell is preferably between about 0.01 and about 0.06 weight percent based on the weight of the zinc. An amount of a compound having polyethylene oxide linkages below 0.001 weight percent combined with an amount of indium below 0.005 weight percent would not effectively reduce the amount of mercury to the range specified above for providing good storage stability for a cell. Using an amount of a compound having polyethylene oxide linkages above 0.8 weight percent combined with an amount of indium above 0.1 weight percent would generally not provide a meaningful increase in the storage stability of the cell to justify the use of such amounts.

In accordance with this invention, one additive cannot be completely substituted for another additive and preferably when using the lowest amount of one of the additives, the other additive should be used in an amount greater than the minimum level of the ranges so that together they can combine to effectively reduce the amount of mercury needed for good storage stability of a cell.

A compound having polyethylene oxide linkages for use in this invention include the ethylene oxide polymers and their derivatives as disclosed in U.S. Patent 3,847,669. Suitable polymers would include diethylene glycol, triethylene glycol, polyethylene glycol having an average molecular weight of from about 190 to about 7,000, and their mono- and diethers and esters. The diethers and esters of polyethylene glycols employed are illustrated by the $C_4$ and lower alkyl ethers and $C_4$ and lower alkanoate esters. Suitable ether derivatives include, for example, methoxy diethylene glycol and the methoxy or ethoxy polyethylene glycols. Suitable ester derivatives include polyethylene glycol esters, phosphate esters containing at least one polyethylene oxide chain and their derivatives.

The preferred compounds having polyethylene oxide linkages are the polyethylene glycols, methoxy polyethylene glycols, phosphate esters containing at least one polyethylene oxide chain and their derivatives. Preferably the polyethylene glycol and methoxy polyethylene glycol have a molecular weight averaging from about 300 to 700.

A compound having polyethylene oxide linkages can be used singly or in combination. They are generally soluble in water and can be added as a water solution to the cell. For example, the additive can be included in the water that is employed to pre-wet the separator in order to facilitate the wetting of the separator by the electrolyte. The additive then migrates to the zinc surface as the cell comes to equilibrium. Alternatively, a compound having polyethylene oxide linkages can be added directly to the zinc during the production of the anode gel.

Indium can be added directly into the zinc anode as an elemental metal or as a compound. Also indate ions can be added to the electrolyte solution and then indium will be deposited on the zinc anode. In addition, indium could be incorporated in the zinc anode by either the process of amalgamation of powder zinc-indium (powdered zinc partially coated with indium); the process of amalgamation of powdered zinc with an amalgam of indium; or the process of amalgamation of a zinc-indium alloy in the form of a powder.

A compound having polyethylene oxide linkages and indium are employed in the cell of this invention in an amount sufficient to reduce the rate of reaction between the zinc and the alkaline electrolyte, thereby permitting a significant reduction in the proportion of mercury needed to achieve satisfactory shelf life.

The cells in which a compound having polyethylene oxide linkages and indium are employed can be of conventional construction. For instance, a suitable cell includes a cupped metallic can, suitably constructed of steel or other metal which may be nickel plated in whole or in part. The extremities of an insulated jacket, when used, are crimped around the outer edges of a top cover and the outer edges of a bottom cover. An insulator insulates the can from the top metal cover. Snugly fitting within the can is a tubular cathode containing particulate manganese dioxide and carbon and lined on the inner surface thereof with a separator suitably made of a non-woven cellulosic fabric.

Enclosed within the separator is an anode made of a mixture of powdered zinc, aqueous potassium hydroxide electrolyte, and an electrolyte-swellable binder such as a polyacrylic acid.

Other types of zinc alkaline cell construction can be used also, including those wherein the anode is massive zinc, pressed powdered zinc, or zinc plated on another metal, as well as those wherein the zinc is in powdered form distributed throughout an electrolyte gel.

The electrolyte employed in the cells is aqueous alkali, particularly potassium hydroxide.

The mercury can be added to the cell by the procedure described in U.S. Patent No. 2,993,974. By practicing the present invention, the amount of mercury needed to achieve any given level of storage stability can be significantly reduced by the addition of a compound having polyethylene oxide linkages and indium as discussed above.

Example 1

Ten C-size cylindrical cells (Lot A) were made each employing 25 g of a cathode having the following formulation based on the weight percent of the cathode:

| Component | Wt. % |
|---|---|
| $MnO_2$ | 76.86 |
| Graphite | 7.58 |
| Acetylene Black | 1.82 |
| Portland Cement | 3.54 |
| 9N KOH | 10.20 |

Each of the 10 cells employed 14.16 g of a zinc anode having the following formulation based on the weight of the anode:

| Component | Wt. % |
|---|---|
| Zinc and zinc oxide powder | 60.14 |
| Metallic mercury | 0.29 |
| Polyacrylic acid | 0.83 |
| 0.1N KOH solution | 38.74 |

Each of the 10 cells also employed an electrolyte solution of 9N KOH along with a cellulosic separator.

Ten additional cells were made (Lot B) as discussed above except that methoxy polyethylene glycol, having an average molecular weight of from 525 to 575 (obtained commercially from Union Carbide under the Tradename Carbowax 550), was added to the anode. Ten additional cells were made (Lot C) as discussed above in Lot B except that in addition to the methoxy polyethylene glycol additive, indium was incorporated into the cell by adding indium hydroxide as a dry powder to the anode mix.

The cells were stored for 8 weeks at 71°C to induce rapid generation of gas. Since the cells are sealed, any internal gas accumulation will cause the bottom of the container to bulge. The cans are drawn from .010 inch (0.25mm) thick steel, and the bulge of the can bottom can be measured in order to estimate internal pressure. The average bulge for each cell lot was calculated and the data produced are shown in Table 1.

4

Table 1

| Cell Lot | Additive in weight percent of zinc | | | Bulge Increase |
|---|---|---|---|---|
| | Hg | In | Glycol | |
| A | 0.5 | 0 | 0 | 0.043 inch (1.09mm) |
| B | 0.5 | 0 | 0.01 | 0.033 inch (0.84mm) |
| C | 0.5 | 0.06 | 0.01 | 0.013 inch (0.33mm) |

As evident from the data shown in Table 1, the addition of the indium and the glycol to the cells in conjunction with a small amount of mercury greatly reduced the pressure buildup within the cells as illustrated by the small increase in bulge of the cells.

Example 2

Three lots A, B, and C of ten cells each were produced in which the cells in each lot were made as in Lots A, B and C in Example 1, respectively. The cells were stored at 45°C for various time periods and the average bulge for each cell lot was calculated and the data produced are shown in Table 2. The cells in each cell lot were observed for any leakage of contents and the results are also shown in Table 2.

Table 2

| Cell Lot | Additive in wt. % of Zinc | | | Storage Time (months) | Bulge Increase (inch)/mm | % Leakage |
|---|---|---|---|---|---|---|
| | Hg | In | Glycol | | | |
| A | 0.5 | 0 | 0 | 6 | 0.057(1.45) | 0 |
| A | 0.5 | 0 | 0 | 9 | 0.065(1.65) | 70 |
| A | 0.5 | 0 | 0 | 12 | * | 100 |
| B | 0.5 | 0 | 0.01 | 6 | 0.045(1.14) | 0 |
| B | 0.5 | 0 | 0.01 | 9 | 0.047(1.19) | 10 |
| B | 0.5 | 0 | 0.01 | 12 | 0.049(1.24) | 10 |
| C | 0.5 | 0.06 | 0.01 | 6 | 0.004(0.10) | 0 |
| C | 0.5 | 0.06 | 0.01 | 9 | 0.005(0.13) | 0 |
| C | 0.5 | 0.06 | 0.01 | 12 | 0.007(0.18) | 0 |

* Since all of the cells leaked before twelve months aging was completed, bulge measurements were not made.

Example 3

Three lots (A, B and C) of ten cells each were produced employing the cathode and electrolyte of Example 1. The anode for each of the cells weighed 14.16 g and had the following formulation based on the weight of the anode:

| Component | Wt. % |
|---|---|
| Zinc and zinc oxide powder | 59.69 |
| Metallic mercury | 0.86 |
| Polyacrylic acid | 0.77 |
| 0.1N KOH Solution | 38.68 |

Cell lots B and C contained indium and/or methoxy polyethylene glycol in the amounts shown in Table 3. The cells in each cell lot were stored for eight weeks at 71°C and the average bulge for each cell lot was calculated. The data obtained are shown in Table 3.

Table 3

| Cell Lot | Additive in wt. % Zinc | | | Bulge Increase (inch)/mm |
|---|---|---|---|---|
| | Hg | In | Glycol | |
| A | 1.5 | 0 | 0 | 0.040 (1.02) |
| B | 1.5 | 0.04 | 0 | 0.029 (0.74) |
| C | 1.5 | 0.04 | 0.07 | 0.009 (0.23) |

Example 4

One lot of five cells (Lot A) and two lots of ten cells each (Lot B and Lot C) were produced as in Example 3 with the amounts of mercury and indium and/or methoxy polyethylene glycol as shown in Table 4. The cells were stored at 45°C for various time periods and the average bulge for each cell lot was calculated and the data produced are shown in Table 4.

Table 4

| Cell Lot | Additive in wt. % of Zinc | | | Storage Time (months) | Bulge Increase (inch)/mm |
|---|---|---|---|---|---|
| | Hg | In | Glycol | | |
| A | 1.5 | 0 | 0 | 3 | 0.022 (0.56) |
| A | 1.5 | 0 | 0 | 6 | 0.030 (0.76) |
| A | 1.5 | 0 | 0 | 9 | 0.035 (0.89) |
| B | 1.5 | 0.04 | 0 | 3 | 0.010 (0.25) |
| B | 1.5 | 0.04 | 0 | 6 | 0.016 (0.41) |
| B | 1.5 | 0.04 | 0 | 9 | 0.020 (0.51) |
| C | 1.5 | 0.04 | 0.07 | 3 | 0.005 (0.13) |
| C | 1.5 | 0.04 | 0.07 | 6 | 0.006 (0.15) |
| C | 1.5 | 0.04 | 0.07 | 9 | 0.008 (0.20) |

Example 5

Nine lots of twenty cells each were produced employing the cathode and electrolyte of Example 1. The anode for each of the cells had the following formulation based on the weight of the anode.

Table 5

| Anode Component (wt. % based on wt. of zinc) | Cell Lots | | |
|---|---|---|---|
| | A, B and C (Anode wt.-14.28g) | D, E and F (Anode wt.-14.27g) | G, H and I (Anode wt.-14.16g) |
| zinc and zinc oxide powder | 59.64 | 59.69 | 59.92 |
| Metallic mercury | 1.14 | 0.86 | 0.58 |
| Polyacrylic acid | 0.77 | 0.77 | 0.79 |
| 0.1N KOH Solution | 38.45 | 38.68 | 38.71 |

Some of the cells in each lot contained indium and/or methoxy polyethylene glycol in the amounts shown in Table 6. The cells were stored for eight weeks at 71°C and the average bulge of the cells in each cell lot was calculated. The data produced are shown in Table 6.

6

Table 6

| Cell Lot | Additive in wt. % Zinc | | | Bulge Increase (inch)/mm |
|---|---|---|---|---|
| | Hg | In | Glycol | |
| A | 2.0 | 0 | 0.15 | 0.017 (0.43) |
| B | 2.0 | 0.04 | 0 | 0.018 (0.46) |
| C | 2.0 | 0.04 | 0.15 | 0.006 (0.15) |
| D | 1.5 | 0 | 0.15 | 0.018 (0.46) |
| E | 1.5 | 0.04 | 0 | 0.022 (0.56) |
| F | 1.5 | 0.04 | 0.15 | 0.008 (0.20) |
| G | 1.0 | 0 | 0.15 | 0.015 (0.38) |
| H | 1.0 | 0.04 | 0 | 0.027 (0.69) |
| I | 1.0 | 0.04 | 0.15 | 0.016 (0.41) |

Example 6

Nine lots having twenty cells in each lot were produced as in Example 1 with the amount of mercury and indium and/or methoxy polyethylene glycol in the cells of each lot as shown in Table 7. The cells were stored for different time periods at 45°C and then the average bulge increase of the cells in each cell lot was calculated. The data produced are shown in Table 7.

Table 7

| Cell Lot | Additive in wt. % of Zinc | | | Bulge Increase (inch)/mm | |
|---|---|---|---|---|---|
| | Hg | In | Glycol | After 3 Months | After 6 Months |
| A | 2.0 | 0 | 0.15 | 0.003(0.08) | 0.007(0.18) |
| B | 2.0 | 0.04 | 0 | 0.006(0.15) | 0.012(0.30) |
| C | 2.0 | 0.04 | 0.15 | 0.003(0.08) | 0.006(0.15) |
| D | 1.5 | 0 | 0.15 | 0.004(0.10) | 0.011(0.28) |
| E | 1.5 | 0.04 | 0 | 0.008(0.20) | 0.014(0.36) |
| F | 1.5 | 0.04 | 0.15 | 0.003(0.08) | 0.005(0.13) |
| G | 1.0 | 0 | 0.15 | 0.004(0.10) | 0.011(0.28) |
| H | 1.0 | 0.04 | 0 | 0.008(0.20) | 0.014(0.36) |
| I | 1.0 | 0.04 | 0.15 | 0.003(0.08) | 0.007(0.18) |

The data in the above examples demonstrate that the combination of a compound having polyethylene oxide linkages and indium in a cell will allow for a substantial reduction of mercury in the cell without adversely affecting the storage stability of the cell.

**Claims**

1. A galvanic cell having a manganese dioxide cathode, an alkaline electrolyte solution and a zinc anode containing mercury, wherein said mercury is present in an amount between about 0.04 and about 3.0 weight per cent based on the weight of the zinc and wherein a compound having polyethylene oxide linkages in an amount of at least about 0.001 weight percent based on the weight of the zinc and indium in an amount between about 0.005 and about 0.1 weight percent based on the weight of the zinc are added to the cell.

2. The cell of claim 1 wherein the compound having polyethylene oxide linkages is selected from the group consisting of diethylene glycol, triethylene glycol, polyethylene glycol, methoxy polyethylene glycols, phosphate esters containing at least one polyethylene oxide chain and their derivatives.

3. The cell of claim 1 or 2 wherein the mercury is present in an amount between about 0.08 and about 2.0 weight percent based on the weight of the zinc, the compound having polyethylene oxide linkages is present in an amount between about 0.001 and about 0.8 weight percent based on the weight of the zinc.

4. The cell of claim 1 or 2 wherein the mercury is present in an amount below about 1 weight percent based on the weight of the zinc, the compound having polyethylene oxide linkages is present in an amount below about 0.2 weight percent based on the weight of the zinc and the indium is present in an amount of below about 0.06 weight percent based on the weight of the zinc.

5. The cell of claim 1 wherein the compound having polyethylene oxide linkages is polyethylene glycol or methoxy polyethylene glycol having an average molecular weight of from about 300 to about 700.

6. The cell of claim 5 wherein the mercury is present in an amount between about 0.5 and about 1.5 weight percent based on the weight of the zinc, the compound having polyethylene oxide linkages is present in an amount between about 0.01 and about 0.2 weight percent based on the weight of the zinc and the indium is present in an amount between about 0.01 and about 0.06 weight percent based on the weight of the zinc.

7. The cell of claim 1 wherein the alkaline electrolyte is aqueous potassium hydroxide.

8. The cell of claim 7 wherein the compound having polyethylene oxide linkages is selected from the group consisting of diethylene glycol, triethylene glycol, polyethylene glycol, methoxy polyethylene glycols, phosphate esters containing at least one polyethylene oxide chain and their derivatives.

9. The cell of claim 7 wherein the compound having polyethylene oxide linkages is polyethylene glycol or methoxy polyethylene glycol having an average molecular weight of from about 300 to about 700.

10. The cell of claim 8 wherein the mercury is present in an amount between about 0.04 and about 2.0 weight percent based on the weight of the zinc, the compound having polyethylene oxide linkages is present in an amount between about 0.001 and about 0.8 weight percent based on the weight of the zinc and the indium is present in an amount between about 0.005 and about 0.1 weight percent based on the weight of the zinc.

**Revendications**

1. Une cellule galvanique comportant une cathode au dioxyde de manganèse, une solution électrolytique alcaline et une anode de zinc contenant du mercure, dans laquelle la quantité du dit mercure représente environ 0,04 à environ 3,0 pourcents en poids par rapport au poids du zinc et dans laquelle un composé à base de liaisons d'oxyde de polyéthylène, dans une quantité représentant au moins environ 0,001 pourcent en poids par rapport au poids du zinc, et de l'indium, dans une quantité représentant environ 0,005 à environ 0,1 pourcent en poids par rapport au poids du zinc, sont ajoutés dans la cellule.

2. La cellule selon la revendication 1, dans laquelle le composé à base de liaisons d'oxyde de polyéthylène est choisi dans le groupe constitué de diéthylène-glycol, de triéthylène-glycol, de polyéthylène-glycol, de méthoxy-polyéthylène-glycols, d'esters de phosphate contenant au moins une chaîne d'oxyde de polyéthylène et de leurs dérivés.

3. La cellule selon les revendications 1 ou 2, dans laquelle la quantité de mercure représente environ 0,08 à environ 2,0 pourcents en poids par rapport au poids du zinc, la quantité du composé à base de liaisons d'oxyde de polyéthylène représentant environ 0,001 à environ 0,8 pourcent en poids par rapport au poids du zinc.

4. La cellule selon les revendications 1 ou 2, dans laquelle la quantité de mercure est inférieure à environ 1 pourcent en poids par rapport au poids du zinc, la quantité du composé à base de liaisons d'oxyde de polyéthylène est inférieure à environ 0,2 pourcent en poids par rapport au poids du zinc et la quantité d'indium est inférieure à environ 0,06 pourcent en poids par rapport au poids du zinc.

**5.** La cellule selon la revendication 1, dans laquelle le composé à base de liaisons d'oxyde de polyéthylène est du polyéthylène-glycol ou du méthoxy-polyéthylène-glycol, d'un poids moléculaire moyen compris entre environ 300 et environ 700.

**6.** La cellule selon la revendication 5, dans laquelle la quantité de mercure représente environ 0,5 à environ 1,5 pourcents en poids par rapport au poids du zinc, la quantité du composé à base de liaisons d'oxyde de polyéthylène représente environ 0,01 à environ 0,2 pourcent en poids par rapport au poids du zinc et la quantité d'indium représente environ 0,01 à environ 0,06 pourcent en poids par rapport au poids du zinc.

**7.** La cellule selon la revendication 1, dans laquelle l'électrolyte alcalin est de l'hydroxyde de potassium aqueux.

**8.** La cellule selon la revendication 7, dans laquelle le composé à base de liaisons d'oxyde de polyéthylène est choisi dans le groupe constitué de diéthylène-glycol, de triéthylène-glycol, de polyéthylène-glycol, de méthoxy-polyéthylène-glycols, d'esters de phosphate contenant au moins une chaîne d'oxyde de polyéthylène et de leurs dérivés.

**9.** La cellule selon la revendication 7, dans laquelle le composé à base de liaisons d'oxyde de polyéthylène est du polyéthylène-glycol ou du méthoxy-polyéthylène-glycol d'un poids moléculaire moyen compris entre environ 300 et environ 700.

**10.** La cellule selon la revendication 8, dans laquelle la quantité de mercure représente environ 0,04 à environ 0,2 pourcent en poids par rapport au poids du zinc, la quantité du composé à base de liaisons d'oxyde de polyéthylène représente environ 0,001 à environ 0,8 pourcent en poids par rapport au poids du zinc et la quantité d'indium représente environ 0,005 à environ 0,1 pourcent en poids par rapport au poids du zinc.

## Patentansprüche

**1.** Galvanisches Element mit einer Mangandioxidkathode, einer alkalischen Elektrolytlösung und einer Zinkanode, die Quecksilber enthält, wobei das Quecksilber in einer Menge zwischen ca. 0,04 und ca. 3,0 Gew.-%, bezogen auf das Gewicht des Zinks, vorhanden ist und wobei eine Verbindung mit Polyethylenoxidbindungen in einer Menge von wenigstens ca. 0,001 Gew.-%, bezogen auf das Gewicht des Zinks, und Indium in einer Menge zwischen ca. 0,005 und ca. 0,1 Gew.-%, bezogen auf das Gewicht des Zinks, dem Element zugesetzt sind.

**2.** Element nach Anspruch 1, wobei die Verbindung mit Polyethylenoxidbindungen aus der Gruppe ausgewählt ist, die aus Diethylenglykol, Triethylenglykol, Polyethylenglykol, Methoxypolyethylenglykolen, Phosphatestern, die wenigstens eine Polyethylenoxidkette enthalten, und ihren Derivaten besteht.

**3.** Element nach Anspruch 1 oder 2, wobei das Quecksilber in einer Menge zwischen ca. 0,08 und ca. 2,0 Gew.-%, bezogen auf das Gewicht des Zinks, und die Verbindung mit Polyethylenoxidbindungen in einer Menge zwischen ca. 0,001 und ca. 0,8 Gew.-%, bezogen auf das Gewicht des Zinks, vorhanden sind.

**4.** Element nach Anspruch 1 oder 2, wobei das Quecksilber in einer Menge von weniger als ca. 1 Gew.-%, bezogen auf das Gewicht des Zinks, die Verbindung mit Polyethylenoxidbindungen in einer Menge von weniger als ca. 0,2 Gew.-%, bezogen auf das Gewicht des Zinks, und das Indium in einer Menge von weniger als ca. 0,06 Gew.-%, bezogen auf das Gewicht des Zinks, vorhanden sind.

**5.** Element nach Anspruch 1, wobei die Verbindung mit Polyethylenoxidbindungen Polyethylenglykol oder Methoxypolyethylenglykol mit einem Durchschnitts-Molekulargewicht von ca. 300 bis ca. 700 ist.

**6.** Element nach Anspruch 5, wobei das Quecksilber in einer Menge zwischen ca. 0,5 und ca. 1,5 Gew.-%, bezogen auf das Gewicht des Zinks, die Verbindung mit Polyethylenoxidbindungen in einer Menge zwischen ca. 0,01 und ca. 0,2 Gew.-%, bezogen auf das Gewicht des Zinks, und das Indium in einer Menge zwischen ca. 0,01 und ca. 0,06 Gew.-%, bezogen auf das Gewicht des Zinks, vorhanden sind.

**7.** Element nach Anspruch 1, wobei der alkalische Elektrolyt wäßriges Kaliumhydroxid ist.

**8.** Element nach Anspruch 7, wobei die Verbindung mit Polyethylenoxidbindungen aus der Gruppe ausgewählt ist, die aus Diethylenglykol, Triethylenglykol, Polyethylenglykol, Methoxypolyethylenglykolen, Phosphatestern, die wenigstens eine Polyethylenoxidkette enthalten, und ihren Derivaten besteht.

**9.** Element nach Anspruch 7, wobei die Verbindung mit Polyethylenoxidbindungen Polyethylenglykol oder Methoxypolyethylenglykol mit einem Durchschnitts-Molekulargewicht von ca. 300 bis ca. 700 ist.

**10.** Element nach Anspruch 8, wobei das Quecksilber in einer Menge zwischen ca. 0,04 und ca. 2,0 Gew.- %, bezogen auf das Gewicht des Zinks, die Verbindung mit Polyethylenoxidbindungen in einer Menge zwischen ca. 0,001 und ca. 0,8 Gew.-%, bezogen auf das Gewicht des Zinks, und das Indium in einer Menge zwischen ca. 0,005 und ca. 0,1 Gew.-%, bezogen auf das Gewicht des Zinks, vorhanden sind.